Europäisches Patentamt

European Patent Office

Office européen des brevets

(11) Veröffentlichungsnummer: **0 448 752 B1**

## (12) EUROPÄISCHE PATENTSCHRIFT

(45) Veröffentlichungstag der Patentschrift: **24.05.95**

(21) Anmeldenummer: **90105820.6**

(22) Anmeldetag: **27.03.90**

(51) Int. Cl.⁶: **B22D 11/16**, G05D 3/12, G01P 3/488

54 Einrichtung zur Lageregelung von Maschinenteilen in Hüttenwerken.

(43) Veröffentlichungstag der Anmeldung:
**02.10.91 Patentblatt 91/40**

(45) Bekanntmachung des Hinweises auf die Patenterteilung:
**24.05.95 Patentblatt 95/21**

(84) Benannte Vertragsstaaten:
**AT BE CH DE FR GB IT LI LU NL**

(56) Entgegenhaltungen:
EP-A- 0 231 474      DE-A- 3 118 768
DE-A- 3 407 294      DE-C- 2 340 768
DE-C- 2 340 768      DE-C- 3 110 012

ELEKTRONIK Band 37, Nr. 9, 29. April 1988, Seiten 93-95,98-101, München, DE; R. LEHMANN et al.:"Entwicklungstendenzen der Servo-Antriebstechnik", 2. Teil

PATENT ABSTRACTS OF JAPAN Band 8, Nr. 180 (M-318)(1617), 18. August 1984;& JP-A-59073160 (SHIN NIPPON) 25.04.1984

PATENT Abstracts of Japan Band 5, Nr. 47 (M-061), 28.März 1981;& JP-A-56004347 (KAWASAKI HEAVY IND. LTD.) 17.01.1981

(73) Patentinhaber: **SIEMENS AKTIENGESELL-SCHAFT**
**Wittelsbacherplatz 2**
**D-80333 München (DE)**

Patentinhaber: **MANNESMANN Aktiengesellschaft**
**Postfach 10 36 41**
**D-40027 Düsseldorf (DE)**

(72) Erfinder: **Goly, Andrea**
**Breslauerstrasse 3**
**D-8520 Erlangen (DE)**
Erfinder: **Nitsche, Hans-Joachim, Dipl.-Ing. (FH)**
**Egidienstrasse 58 a**
**D-8520 Erlangen (DE)**
Erfinder: **Drechsel, Wolfgang, Dipl.-Ing. (FH)**
**Freiherr-von-Stein-Strasse 9**
**D-8586 Gefrees (DE)**
Erfinder: **Zill, Jürgen**
**Brockenstrasse 28**
**D-4100 Duisburg 25 (DE)**
Erfinder: **Pfluger, Manfred**
**Kleestrasse 30**
**D-4100 Duisburg 29 (DE)**

Erfinder: **Ehrenberg, Hans-Jürgen, Dipl.-Ing.**
**Im Kleinen Winkel 28**
**D-4000 Düsseldorf 31 (DE)**

(74) Vertreter: **Fuchs, Franz-Josef, Dr.-Ing. et al**
**Postfach 22 13 17**
**D-80503 München (DE)**

## Beschreibung

Die Erfindung betrifft eine Einrichtung zur Lageregelung von Maschinenteilen in Hüttenwerken gemäß den Oberbegriffsmerkmalen des Patentanspruchs 1.

Eine derartige Einrichtung ist aus der DE-A-2 340 768 bekannt und dient zur geregelten Verstellung der Schmalseiten einer Stranggießkokille. Dabei erfolgt die Verstellung der Schmalseiten der Kokille jeweils durch einen Servomotor mit einer Lageauswertungs- und Motoransteuerungseinheit sowie einer übergeordneten Rechen- und Steuereinheit.

Aus ELEKTRONIK, Bd. 37, Nr. 9, 29.04.1988, S. 93-95 und 98-101, ist die Verwendung von Resolvern als Lagegeber für Servomotoren bekannt. Ein Resolver weist zwei versetzte Statorspulen auf, in denen von einer dritten, auf der Welle des Lagegebers angeordneten und von Wechselstrom gespeisten Spule zwei Spannungen induziert werden; die Spannungen werden einer Lageauswertungseinheit zugeleitet, welche daraus ständig die Lage der Welle und die Drehzahl des Servomotors ermittelt.

Aufgabe der Erfindung ist es, eine Einrichtung zur Lageregelung von Maschinenteilen in Hüttenwerken anzugeben, die im Hinblick auf die Hitze und den Schmutz in Hüttenwerken störunempfindliche und kostengünstige Absolutwertgeber aufweist und eine genaue Positionierung der Maschinenteile ermöglicht.

Gemäß der Erfindung wird die Aufgabe durch die dem Patentanspruch 1 angegebene Einrichtung gelöst.

Weitere vorteilhafte Ausbildungen der erfindungsgemäßen Einrichtung sind in den Unteransprüchen angegeben.

Zur Erläuterung der Erfindung wird im folgenden auf die Figuren der Zeichnung Bezug genommen. Dabei zeigen:

FIG 1    eine Prinzipschaltung einer Verstellkokille mit einer erfindungsgemäßen Einrichtung zur Lageregelung,

FIG 2    den Prinzipaufbau eines Lagegebers, und

FIG 3    den Prinzipaufbau eines Umdrehungsgebers.

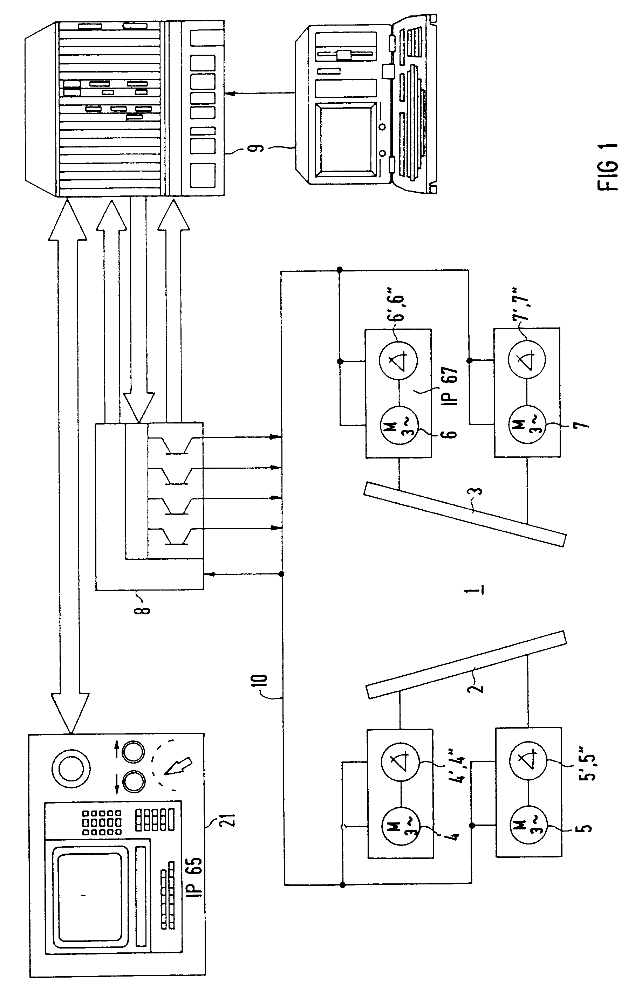

In FIG 1 ist als beispielhafte Anwendung der Erfindung der prinzipielle Aufbau der Lageregelung an einer Verstellkokille 1 einer Stranggießanlage gezeigt. Die Schmalseiten 2, 3 der Verstellkokille 1 sind mittels der Servomotoren 4 bis 7 positionierbar.

Die Servomotoren 4 bis 7 sind dabei mit Vorteil als drehstromgespeiste Synchronmotoren ausgebildet, wobei, wiederum mit Vorteil, die Stromversorgung der Servomotoren 4 bis 7 über (nicht dargestellte) wechsel-, dreh- oder gleichstromgespeiste Zwischenkreisumrichter erfolgt. Mit den Servomotoren 4 bis 7 sind Lagegeber 4' bis 7' und Umdrehungsgeber 4'' bis 7'' verbunden, von denen an die Lageauswertungs- und Motoransteuerungseinheit 8 laufend Relativlagen der Lagegeber 4' bis 7' und Sektorimpulse der Umdrehungsgeber 4'' bis 7'' übermittelt werden.

Da die Lagegeber 4' bis 7' und die Umdrehungsgeber 4'' bis 7'' fest mit den Servomotoren 4 bis 7 verbunden sind, im einfachsten Fall z.B. bilden die Wellen eine Einheit, sind damit indirekt auch die Lagen der Wellen der Servomotoren 4 bis 7 und die Absolutverstellungen der Schmalseiten 2, 3 der Stranggießkokille 1, bzw. allgemeiner der Maschinenteile, bestimmbar. Durch Berücksichtigung des Übersetzungsverhältnisses der Servomotoren 4 bis 7 zu den Lagegebern 4' bis 7' und den Umdrehungsgebern 4'' bis 7'' und weiterhin der Umsetzung von Motorumdrehung zu Verstellweg des jeweiligen Maschinenteils sind damit auch die Rotorlagen und Drehzahlen der Servomotoren 4 bis 7 und die Absolutlage der Maschinenteile bestimmbar.

Der Aufbau der Lagegeber 4' bis 7' und der Umdrehungsgeber 4'' bis 7'' sowie der Meßvorgang werden weiter unten noch ausführlich beschrieben.

Die Lageauswertungs- uns Motoransteuerungseinheit 8 berechnet aus diesen analog übertragenen Signalen digital die Lagegeberlagen der Servomotoren 4 bis 7 sowie die Absolutlagen der Schmalseiten 2, 3 der Verstellkokille 1 und leitet diese an eine übergeordnete Steuer- und Recheneinheit 9 weiter. Die Drehzahlen werden analog weitergegeben und ausgewertet. Die Steuer- und Recheneinheit 9, z.B. ein PC oder eine speicherprogrammierbare Steuerung, vergleicht die so ermittelte Ist-Lage mit von außen oder z.B. vom Steuerprogramm vorgegebenen aktuellen Sollwerten, die konstant oder auch zeitabhängig sein können. Falls der Vergleich von Ist- und Sollwerten eine Abweichung ergibt, werden von der Steuer- und Recheneinheit 9 Befehle zur Lagekorrektur der Kokillenschmalseiten 2, 3 an die Lageauswertungs- und Motoransteuerungseinheit 8 übermittelt. Die tatsächlichen Lagewerte werden auf dem Bildschirm des Gerätes 21 angezeigt, das vorteilhaft gießbühnenfest ausgeführt ist und auch alle Werte des Gießprozesses anzeigt sowie die Steuerung des Einrichtprozesses erlaubt.

Wenn die Stranggießanlage angefahren wird, wird zunächst die Verstellkokille 1 in eine, z.B. durch Anschläge, fest vorgegebene Eichposition verfahren, geprüft, ob die Eichung noch korrekt ist, und gegebenenfalls der in der Lageauswertungs- und Motoransteuerungseinheit 8 gespeicherte Absolutlagewert auf Null gesetzt. Die Betriebspositionen werden dann nach vorgegebenen Tabellenwerten angefahren, die für die gegossenen Stähle vorab ermittelt worden sind.

Um die Absolutlage der Servomotoren 4 bis 7 auch während des Nichtbetriebes der Stranggießanlage erfassen zu können, ist die Lageauswertungs- und Motoransteuerungseinheit 8 vorteilhaft mit einer - nicht dargestellten - Batterie gepuffert.

Während des Betriebs der Einrichtung zur Lageregelung werden die Verbindungsleitungen 10, die über 100 m lang sein können, vorteilhaft fortlaufend auf Signalverlust überprüft, z.B. durch Vergleich der Amplitudenlagen der induzierten Spannungen.

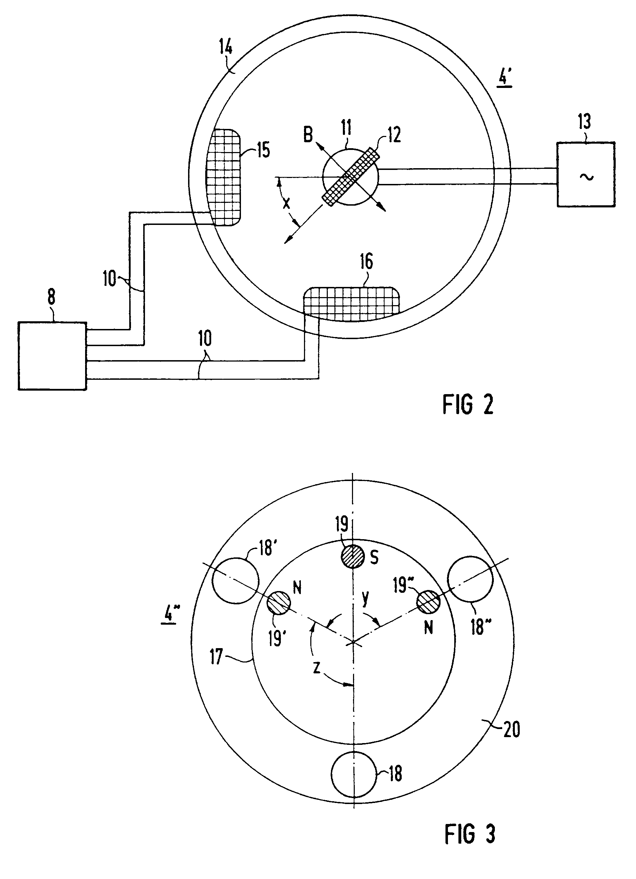

FIG 2 zeigt exemplarisch den Aufbau des Lagegebers 4'. Dessen Welle 11 ist mit der Welle des Servomotors 4 fest verbunden, so daß mit der Lage der Welle 11 auch die Lage der Welle des Servomotors 4 bestimmt ist. Auf der Welle 11 ist eine Spule 12 angebracht, in die von einem Oszillator 13 ein Wechselstrom eingespeist wird. Der Wechselstrom ist dabei von so hoher Frequenz, daß die Lage der Welle 11 während einer Wechselstromperiode näherungsweise konstant ist. Dies ist in der Regel mit hinreichender Genauigkeit gegeben, wenn die in die Spule 12 eingespeiste Frequenz deutlich größer ist als die Grenzdrehzahl der Welle 11, z.B. mindestens 10 mal so groß. Wenn die Frequenz des Oszillators 13 z.B. 5 kHz beträgt, kann der Lagegeber 4' mit einer Drehzahl bis zu 60 x 5000 : 10 = 30000 $min^{-1}$ betrieben werden. Die normale Betriebsdrehzahl beträgt 10.000 $min^{-1}$.

Der in die Spule 12 vorteilhaft schleifringlos eingespeiste Strom erzeugt ein magnetisches Wechselfeld B, das in den im Gehäuse 14 des Lagegebers 4' angeordneten Spulen 15 und 16 zwei Wechselspannungen $U_1$ und $U_2$ induziert, die der Lageauswertungsund Motoransteuerungseinheit 8 zugeführt werden. Die Lageauswertungs- und Motoransteuerungseinheit 8 errechnet aus den vorzeichenbehafteten Amplituden $U_1$ und $U_2$ die Lage x der Welle 11 (modulo 360°). Besonders günstig sind die Spulen 15 und 16 um 90° versetzt angeordnet, da sich in diesem Falle die Lage x der Welle 11 unter Beachtung der Vorzeichen von $U_1$ und $U_2$ direkt aus dem Amplitudenverhältnis ergibt:

$$x = \arctan(U_1 : U_2).$$

Mit dem Lagegeber 4' kann die Lage x der Welle 11 direkt nur modulo 360°, z.B. von -180° bis +180°, bestimmt werden.

Um die Absolutlage des Lagegebers 4' und damit auch des vom Servomotor 4 verstellten Maschinenteils zu erhalten, gibt es zwei Möglichkeiten:

a) Es wird jeder Lage-Istwert mit dem vorhergehenden Lage-Istwert verglichen und bei einem scheinbar unstetigen Sprung, z.B. von +175° auf -175°, ein Umdrehungszähler entsprechend korrigiert.

b) Mit dem Servomotor 4 ist zusätzlich ein Umdrehungsgeber 4'' verbunden, von dem pro Umdrehung eine Impulsfolge an die Geberauswertung 8 übermittelt wird, aus der direkt auf die Richtung der Umdrehung zurückgeschlossen werden kann. Diese Möglichkeit wird bei Spannungsausfall benutzt. Hierfür reicht die Batteriepufferung aus.

FIG 3 zeigt den Aufbau des Umdrehungszählers 4''. Er kann z.B. im Gehäuse 14 des Lagegebers 4' untergebracht sein, er kann aber auch ein eigenes Gehäuse 20 besitzen. Um die Welle 17 des Umdrehungsgebers 4'' sind mindestens drei Impulsdrahtsensoren 18, 18' und 18'' angeordnet. Auf der Welle 17 sind drei Magnete 19, 19' und 19'' derart angeordnet, daß der Winkel y, den die beiden äußeren Magnete 19', 19'' mit der Welle 17 einschließen, maximal so groß ist wie der kleinste Winkel z, den benachbarte Impulsdrahtsensoren, z.B. die Impulsdrahtsensoren 18 und 18', mit der Welle 17 einschließen. Der mittlere Magnet 19 ist dabei entgegengesetzt magnetisiert wie die beiden äußeren Magnete 19' und 19''. Der Magnet 19 dient als Setzmagnet, der in den Impulsdrahtsensoren 18, 18', 18'' beim Passieren einen Impuls auslöst. Die Magnete 19', 19'' setzen den jeweiligen Impulsdrahtsensor, den sie passieren, wieder zurück. Wenn ein Impuls ausgelöst wird, wird er mit dem vorhergegangen Impuls verglichen. Bei jeder Impulsfolge 18''-18' bzw. 18'-18'' wird ein Umdrehungszähler in der Lageauswertungs- und Motoransteuerungseinheit 8 um eins erhöht bzw. erniedrigt.

**Patentansprüche**

1. Einrichtung zur Lageregelung von Maschinenteilen in Hüttenwerken, z. B. zur geregelten Verstellung der Schmalseiten (2, 3) einer Stranggießkokille (1), die mindestens einen Servomotor (4) mit einer Lageauswertungs- und Motoransteuerungseinheit (8) sowie einer übergeordneten Steuer-und Recheneinheit (9) aufweist,
**dadurch gekennzeichnet**,
daß mit dem Servomotor (4) ein Lagegeber (4') in Form eines Resolvers verbunden ist, der zwei versetzte Spulen (15, 16) aufweist, in denen von einer dritten, auf der Welle (11) des Lagegebers (4') angeordneten und von Wechselstrom gespeisten Spule (12) zwei Spannungen ($U_1$, $U_2$) induziert werden, wobei die Frequenz des Wechselstroms deutlich größer als die Grenzdrehzahl der Lagegeberwelle (11) ist, so daß die Lage der Welle (11) während einer Wechselstromperiode näherungsweise konstant ist, und wobei die Spannungen ($U_1$, $U_2$) der Lageauswertungs- und Motoransteuerungseinheit (8) zugeleitet werden, welche daraus ständig die Lage der Welle (11) und die Drehzahl des Servomotors (4) ermittelt und daraus die Absolutlage der Maschinenteile berechnet, und daß von der Steuer- und Recheneinheit (9) vor jedem Neu-Anfahren der Maschine ein Eichvorgang durch Verfahren der Maschinenteile (2, 3) auf eine durch Anschläge fest vorgegebene Eichposition und anschließendes Nullsetzen des in der Lageauswertungs- und Motoransteuerungseinheit (8) gespeicherten Absolutlagewertes durchgeführt wird.

2. Einrichtung nach Anspruch 1, **dadurch gekennzeichnet,** daß die Spulen (15, 16) um einen Winkel von

$$\frac{360°}{n}$$

versetzt sind, wobei n > 2 ist.

3. Einrichtung nach Anspruch 1 oder 2, **dadurch gekennzeichnet,** daß zusätzlich
   - mit mindestens einem Servomotor (4) ein Umdrehungsgeber (4'') verbunden ist, der aus mindestens drei Impulsdrahtsensoren (18, 18', 18'') und drei auf der Welle (17) des Umdrehungsgebers (4'') befestigten Magneten (19, 19', 19'') besteht,
   - wobei der Winkel (y), den die beiden äußeren Magnete (19', 19'') mit der Welle (17) einschließen, maximal so groß wie der kleinste Winkel (z) ist, den benachbarte Impulsdrahtsensoren (z.B. 18, 18') mit der Welle (17) einschließen, und
   - die beiden äußeren Magnete (19', 19'') gleich magnetisiert sind und der mittlere Magnet (19) entgegengesetzt zu den äußeren Magneten (19, 19'') magnetisiert ist.

4. Einrichtung nach Anspruch 1, 2 oder 3, **dadurch gekennzeichnet,** daß die Stromversorgung der Servomotoren (4-7) über wechsel- oder drehstromgespeiste Zwischenkreisumrichter erfolgt.

5. Einrichtung nach einem oder mehreren der Ansprüche 1 bis 4, **dadurch gekennzeichnet,** daß die Servomotoren (4-7) schleifringlose drehstromgespeiste Synchronmotoren sind.

6. Einrichtung nach einem oder mehreren der Ansprüche 1 bis 5, **dadurch gekennzeichnet,** daß die Steuer- und Recheneinheit (9) eine speicherprogrammierbare Steuerung mit gespeicherten Sollpositionen und/oder Sollpositions-Abfolgen ist.

7. Einrichtung nach einem oder mehreren der Ansprüche 1 bis 6, **dadurch gekennzeichnet,** daß die Lageauswertungs- und Motoransteuerungseinheit (8) einen unterbrechungsfrei arbeitenden Energiespeicher, z.ß. eine Pufferbatterie, zur Sicherstellung der Funktion und Speicherung der Absolutwerte enthält.

8. Einrichtung nach einem oder mehreren der obigen Ansprüche, **dadurch gekennzeichnet,** daß von der Lageauswertungs- und Motoransteuerungseinheit (8) während des Betriebs der Einrichtung die Verbindungsleitungen (10) zu den Lagegebern (4'-7') und den Umdrehungsgebern (4''-7'') fortlaufend auf Signalverlust, z.B. auf Unterbrechung oder Schleifenkurzschluß, überprüft werden.

9. Einrichtung nach einem oder mehreren der obigen Ansprüche, **dadurch gekennzeichnet,** daß zur geregelten Verstellung der Schmalseiten (2, 3) einer Stranggießkokille (1) von Zwischenkreisumrichtern gespeiste Drehstrom-Synchronmotoren (4-7) mit Lagegebern (4'-7') verwendet werden, die die Lage eines Stellgliedes aus Wechselspannungen ($U_1$, $U_2$) ermitteln und an eine weiter entfernte Lageauswertungs- und Motoransteuerungseinheit (8) übertragen.

10. Einrichtung nach einem oder mehreren der vorherigen Ansprüche, **gekennzeichnet** durch die Verwendung eines Absolutlage-Gebersystems zum Einstellen und Halten der Position der Schmalseiten einer Stranggießkokille.

**Claims**

1. Device for the position-control of machine parts in metallurgical plants, for example for the controlled adjustment of the narrow sides (2, 3) of a continuous-casting permanent mould (1) which has at least one servomotor (4) with a position-evaluation and motor-control unit (8) as well as a control and calculating unit (9) of higher level, characterized in that a position encoder (4') in the form of a resolver is connected to the servomotor (4), the position encoder having two offset coils (15, 16) in which two voltages ($U_1$, $U_2$) are induced from a third coil (12) arranged on the shaft (11) of the position encoder (4') and supplied with alternating current, whereby the frequency of the alternating current is clearly greater than the limit speed of the position-encoder shaft (11) with the result that the position of the shaft (11) during an alternating-current period is approximately constant, and whereby the voltages ($U_1$, $U_2$) are supplied to the position-evaluation and motor-control unit (8), which constantly determines therefrom the position of the shaft (11) and the speed of the servomotor (4) and from this calculates the absolute position of the machine parts, and in that the control and calculating unit (9) before each restarting of the machine carries out a calibrating procedure by moving the machine parts (2, 3) into a calibrating position which is firmly specified by limit stops and by subsequent zeroing of the absolute position value stored in the position-evaluation and motor-control unit (8).

2. Device according to claim 1, characterized in that the coils (15, 16) are offset by an angle of 360°/n, whereby n > 2.

3. Device according to claim 1 or 2, characterized in that additionally
   - a revolution encoder (4'') is connected to at least one servomotor (4), the encoder consisting of at least three pulse wire sensors (18, 18', 18'') and three magnets (19, 19', 19'') fastened to the shaft (17) of the revolution encoder (4''),
   - whereby the angle (y) which is formed by the two outer magnets (19', 19'') with the shaft (17) is at maximum as large as the smallest angle (z), which is formed by adjacent pulse wire sensors (for example 18, 18') with the shaft (17), and
   - the two outer magnets (19', 19'') are magnetized equally and the centre magnet (19) is magnetized oppositely to the outer magnets (19', 19'').

4. Device according to claim 1, 2 or 3, characterized in that the current supply of the servomotors (4-7) takes place by way of indirect converters supplied with alternating current or three-phase current.

5. Device according to one or more of claims 1 to 4, characterized in that the servomotors (4-7) are synchronous motors which do not have sliprings and are supplied with three-phase current.

6. Device according to one or more of claims 1 to 5, characterized in that the control and calculating unit (9) is a memory-programmable control unit with stored desired positions and/or sequences of desired positions.

7. Device according to one or more of claims 1 to 6, characterized in that the position-evaluation and motor-control unit (8) contains an energy store operating without interruption, for example a buffer battery, to ensure the function and storing of the absolute values.

8. Device according to one or more of the above claims, characterized in that during the operation of the device the position-evaluation and motor-control unit (8) tests the connection lines (10) to the position encoders (4'-7') and the revolution encoders (4''-7'') continuously for signal loss, for example for interruption or loop short-circuit.

9. Device according to one or more of the above claims, characterized in that for the controlled adjustment of the narrow sides (2, 3) of a continuous-casting permanent mould (1) three-phase synchronous motors (4-7), supplied by indirect converters, with position encoders (4'-7') are used, which determine the position of an actuator from alternating voltages ($U_1$, $U_2$) and transmit it to a position-evaluation and motor-control unit (8) further away.

10. Device according to one or more of the preceding claims, characterized by the use of an absolute-position encoder system for adjusting and holding the position of the narrow sides of a continuous-casting permanent mould.

**Revendications**

1. Dispositif de contrôle de la position des parties d'une machine dans les usines métallurgiques, par exemple pour l'ajustage des chants (2, 3) d'une lingotière de coulée continue (1), comprenant au moins un servo-moteur (4) pourvu d'une unité (8) d'évaluation de la position et de commande du moteur ainsi que d'une unité principale (9) de commande et de calcul, ce dispositif étant caractérisé en ce que, au servo-moteur (4) est relié un capteur de position (4') se présentant sous la forme d'un décomposeur et pourvu de deux bobines (15, 16) décalées dans lesquelles deux tensions ($U_1$, $U_2$) sont induites par une troisième bobine (12) située sur l'arbre (11) du capteur de position (4') et alimentée en courant alternatif, la fréquence du courant alternatif étant nettement supérieure à la vitesse limite de rotation de l'arbre (11) du capteur de position, de manière à ce que la position de l'arbre (11) soit à peu près constante pendant une période du courant alternatif, et les tensions ($U_1$, $U_2$) étant amenées vers l'unité (8) d'évaluation de la position et de commande du moteur, laquelle, à partir de celles-ci, détermine de manière continue la position de l'arbre (11) et la vitesse de rotation du servo-moteur (4) et en calcule la position absolue des parties d'une machine, et en ce que, avant chaque remise en marche de la machine, une opération d'étalonnage est exécutée par l'unité (9) de commande et de calcul par déplacement des parties (2, 3) d'une machine sur une position étalon fixée par des butées et par la suite par remise à zéro de la valeur de position absolue enregistrée dans l'unité (8) d'évaluation de la position et de commande du moteur.

2. Dispositif selon la revendication 1, caractérisé en ce que les bobines (15, 16) sont décalées d'un angle de

$$\underline{360°}, \quad n$$

où n > 2.

3. Dispositif selon la revendication 1 ou 2, caractérisé en ce que, en plus,
   - à au moins un servo-moteur (4) est relié un capteur de rotation (4'') qui est formé d'au moins trois lignes de raccordement de sondes linéaires à impulsion (18, 18', 18'') et de trois aimants (19, 19', 19'') fixés sur l'arbre (17) du capteur de rotation (4''),
   - l'angle (y) que les deux aimants extérieurs (19', 19'') forment avec l'arbre (17) est, au maximum, aussi grand que le plus petit des angles (z) que forment des lignes de raccordement de sondes linéaires à impulsion voisines (par exemple 18, 18') avec l'arbre (17), et
   - les deux aimants extérieurs (19', 19'') ont une aimantation allant dans le même sens et l'aimant central (19) a une aimantation allant dans le sens contraire de celui des aimants extérieurs (19', 19'').

4. Dispositif selon l'une des revendications 1, 2 ou 3, caractérisé en ce que l'alimentation en courant électrique des servo-moteurs (4-7) se fait par l'intermédiaire de convertisseurs ayant des circuits intermédiaires alimentés en courant alternatif ou en courant triphasé.

5. Dispositif selon l'une ou plusieurs des revendications 1 à 4, caractérisé en ce que les servo-moteurs (4-7) sont des moteurs synchrones sans bague collectrice alimentés en courant triphasé.

6. Dispositif selon l'une ou plusieurs des revendications 1 à 5, caractérisé en ce que l'unité (9) de commande et de calcul est une commande par programme enregistrable avec positions théoriques et/ou successions de positions théoriques enregistrées.

7. Dispositif selon l'une ou plusieurs des revendications 1 à 6, caractérisé en ce que l'unité (8) d'évaluation de la position et de commande du moteur contient uni accumulateur d'énergie fonctionnant sans interruption, par exemple une batterie tampon, servant à assurer la fonction et à enregistrer les valeurs absolues.

8. Dispositif selon l'une ou plusieurs des revendications ci-dessus, caractérisé en ce que, pendant le fonctionnement du dispositif, les lignes de raccordement (10) menant aux capteurs de position (4'-7') et aux capteurs de rotation (4''-7'') sont surveillées de façon continue par l'unité (8) d'évaluation de la position et de commande du moteur, à la recherche d'une perte de signal, par exemple d'interruption ou de court-circuit de boucle.

9. Dispositif selon l'une ou plusieurs des revendications ci-dessus, caractérisé en ce que, pour l'ajustage des chants (2, 3) d'une lingotière de coulée continue (1), on utilise des moteurs synchrones (4-7) à courant triphasé alimentés par des convertisseurs ayant des circuits intermédiaires et comportant des capteurs de position (4'-7') qui déterminent la position d'un élément de réglage à partir de tensions alternatives ($U_1$, $U_2$) et la transmettent à une unité (8) d'évaluation de la position et de commande du moteur située plus loin.

10. Dispositif selon l'une ou plusieurs des revendications précédentes, caractérisé par l'utilisation d'un système de capteurs de position absolue pour le réglage et le maintien de la position des chants d'une lingotière de coulée continue.

FIG 1

EP 0 448 752 B1

FIG 2

FIG 3

9